# EUROPEAN PATENT SPECIFICATION

(11) **EP 4 457 575 B1**
(45) Date of publication and mention of the grant of the patent: **20.05.2026**
(21) Application number: 21847979.8
(22) Date of filing: 31.12.2021
(51) Int. Cl.: G05D 7/01

(54) **A PRESSURE-INDEPENDENT CONTROL VALVE WITH A FLUID PRESSURE DISTRIBUTING SLEEVE, AND METHOD OF DISTRIBUTING FLUID PRESSURE**
DRUCKUNABHÄNGIGES STEUERVENTIL MIT EINER FLUIDDRUCKVERTEILUNGSHÜLSE UND VERFAHREN ZUR VERTEILUNG VON FLUIDDRUCK
SOUPAPE DE COMMANDE INDÉPENDANTE DE LA PRESSION DOTÉE D'UN MANCHON DE DISTRIBUTION DE PRESSION DE FLUIDE ET PROCÉDÉ DE DISTRIBUTION DE PRESSION DE FLUIDE

(43) Date of publication of application: 06.11.2024
(73) Proprietor: Pittway Sarl, 1180 Rolle (CH)
(72) Inventor: SVEJNOHA, Petr, 1180 Rolle (CH); FADRNY, Petr, 1180 Rolle (CH)
(74) Representative: Murgitroyd & Company
(86) International application number: PCT/EP2021/087906
(87) International publication number: WO 2023/126068

(56) References cited:
- EP-A1- 3 553 623
- US-A1- 2010 170 581
- US-A1- 2016 266 584
- US-A1- 2018 107 231

## Description

### Field of invention

The invention relates to pressure-independent control valves having a fluid pressure distributing sleeve, and to distributing fluid pressure in said valves.

### Background

Pressure-independent control valves (PICV) can regulate a flow of fluid, and keep it constant, even during variable pressure conditions. PICVs are commonly used in fluid systems such as, for example, in heating, ventilation and air conditioning (HVAC) systems for controlling the flow of fluid through the conduits of the system. For example, a PICV may be used in a HVAC fluid system to control the flow of water through a conduit in order to provide heating or cooling.

Pressure-independent control valves (PICV) typically comprise a fluid inlet where the fluid has pressure P1, a fluid outlet where the fluid has pressure P3, and a fluid path extending between the fluid inlet and the fluid outlet where the fluid has a pressure P2. The pressure differs through the valve whereby P1 > P2 > P3.

Pressure-independent control valves (PICV) comprise a pressure differential control to maintain a constant pressure difference, and thereby maintain a constant flow rate of fluid regardless of any changes in pressure.

To provide the constant pressure difference, fluid at the fluid inlet and/or the fluid outlet has to be communicated to the pressure differential control. Conventionally, this is achieved by using a fluid channel that extends within the valve body. Providing the fluid channel within the valve body requires high precision machining. The machining process is complex and expensive, and there is risk of damaging the fluid channel and/or other components of the valve during machining.

US2010170581A1, US2016266584A1, US2018107231A1, and EP3553623A1 can be regarded as useful to understand the invention.

### Summary

The invention seeks to address and/or ameliorate the problems of pressure independent control valves described above.

According to the present disclosure there is provided a pressure independent control valve as described in the accompanying claims.

A first aspect of the invention relates to a pressure independent control valve comprising:
a valve body comprising a fluid inlet and a fluid outlet,
a fluid path between the fluid inlet and the fluid outlet;
a pressure differential control; and
a sleeve inserted within the valve body;
whereby the pressure differential control comprises a chamber in fluid communication with the fluid inlet or the fluid outlet;
   whereby when the chamber is in fluid communication with the fluid outlet, the sleeve comprises a first fluid channel extending between the fluid outlet and the chamber to provide the fluid communication between the fluid outlet and the chamber, or
   whereby when the chamber is in fluid communication with the fluid inlet, the sleeve comprises a second fluid channel extending between the fluid inlet and the chamber to provide the fluid communication between the fluid inlet and the chamber.

When the chamber is in fluid communication with the fluid outlet, the first fluid channel is configured to guide fluid to flow from the fluid outlet into the chamber. As such, the chamber has the same fluid pressure as the fluid outlet.

Alternatively, when the chamber is in fluid communication with the fluid inlet, the second fluid channel is configured to guide fluid to flow from the fluid inlet into the chamber. As such, the chamber has the same fluid pressure as the fluid inlet.

The valve comprises a fluid path pressure sensor and the sleeve further comprises a third fluid channel extending between the fluid path and the fluid path pressure sensor.

Hence, the third fluid channel is configured to guide fluid to flow from the fluid path to the fluid path pressure sensor to allow for the fluid pressure in the fluid path to be monitored by the fluid path pressure sensor.

When the chamber is in fluid communication with the fluid outlet, the valve may comprise a fluid outlet pressure sensor and the sleeve may comprise a fourth fluid channel extending between the fluid outlet and a fluid outlet pressure sensor. The fourth fluid channel is configured to guide fluid to flow from the fluid outlet to the fluid outlet pressure sensor to allow for the fluid pressure in the fluid outlet to be monitored by the fluid outlet pressure sensor.

Or alternatively, when the chamber is in fluid communication with the fluid inlet, the valve may comprise a fluid inlet pressure sensor and the sleeve may comprise a fifth fluid channel extending between the fluid inlet and a fluid inlet pressure sensor. The fifth fluid channel is configured to guide fluid to flow from the fluid inlet to the fluid inlet pressure sensor to allow for the fluid pressure in the fluid inlet to be monitored by the fluid inlet pressure sensor.

Advantageously, the one or more fluid channels of the sleeve distribute fluid to different regions of the valve. As such, the sleeve is able to distribute fluid pressure within the valve.

Advantageously, by using the sleeve with one or more fluid channels, no fluid channel need extend within the valve body of the valve.

Advantageously, the sleeve is a separate component to the valve body, being separately formed from the valve body. The one or more fluid channel may be formed within the sleeve or defined by the sleeve when inserted in the valve body. The one or more fluid channels may formed simply and quickly within the sleeve or defined by the sleeve, and without machining the valve body.

The sleeve is configured to house the fluid path and the pressure differential control.

The valve may further comprise a fluid flow control to control the flow of fluid. The sleeve may be configured to house the fluid flow control.

When the chamber of the pressure differential control is in fluid communication with the fluid outlet, the pressure differential control may be configured to control a pressure differential between the fluid path and the fluid outlet.

When the chamber of the pressure differential control is in fluid communication with the fluid inlet, the pressure differential control may be configured to control a pressure differential between the fluid path and the fluid inlet.

The sleeve may comprise a plastic material. The sleeve may be manufactured by an injection moulding technique.

A second aspect of the invention relates to a fluid system comprising:
a pressure-independent control valve according to the first aspect of the invention:
a first fluid pipe coupled to the fluid inlet of the valve;
a second fluid pipe coupled to the fluid outlet of the valve.

A third aspect of the invention relates to a method of distributing fluid pressure in a pressure-independent control valve according to the first aspect of the invention comprising:
when the chamber is in fluid communication with the fluid outlet and the first fluid channel of the inserted sleeve extends between the chamber and the fluid outlet, guiding fluid to flow from the fluid outlet to the chamber via the first fluid channel of the inserted sleeve;
   or
when the chamber is in fluid communication with the fluid inlet and the second fluid channel of the inserted sleeve extends between the chamber and the fluid inlet, guiding fluid to flow from the fluid inlet to the chamber via the second fluid channel of the inserted sleeve.

The method may comprise:
guiding fluid to flow from the fluid path to the fluid path pressure sensor via the third fluid channel formed in the inserted sleeve;
monitoring the fluid pressure of the fluid path using the fluid path pressure sensor.

The method may comprise:
when the chamber is in fluid communication with the fluid outlet and the fourth channel of the inserted sleeve extends between the fluid outlet and the fluid outlet pressure sensor:
   guiding fluid to flow from the fluid outlet to the fluid outlet pressure sensor via the fourth channel of the inserted sleeve; and
   monitoring the fluid pressure of the fluid outlet using the fluid outlet pressure sensor;
      or
when the chamber is in fluid communication with the fluid inlet outlet and the fifth channel of the inserted sleeve extends between the fluid inlet and the fluid inlet pressure sensor:
   guiding fluid to flow from the fluid inlet to the fluid inlet pressure sensor via the fifth channel of the inserted sleeve;
   monitoring the fluid pressure of the fluid inlet using the fluid inlet pressure sensor.

### Brief description of the drawings

For a better understanding and to show how it may be carried into effect, reference will now be made, by way of example only, to the accompanying drawings, in which:
Fig 1 is an external view of an embodiment of a pressure independent controlled valve according to the present invention;
Fig 2 is a cross-sectional view of the embodiment of the valve according to the present invention;
Figs 3a and 3b are cross-sectional views of the embodiment of the valve according to the present invention where the fluid flow control is arranged in different positions;
Fig 4 is a side view of the sleeve of the valve according to the present invention, where the sleeve is housing a pressure differential control and a fluid flow control;
Fig 5a is a side view of the flow fluid control of the valve according to the present invention;
Fig 5b is a cross-sectional view of the flow fluid control of the valve according to the present invention.

### Detailed description

Features described in the following detailed description can be combined to arrive at specific embodiments not explicitly described herein.

The same reference numbers in the drawings designate the same or corresponding elements.

Throughout the detailed description, the terms "valve" and "pressure-independent control valve", and the abbreviation "PICV" are used interchangeably.

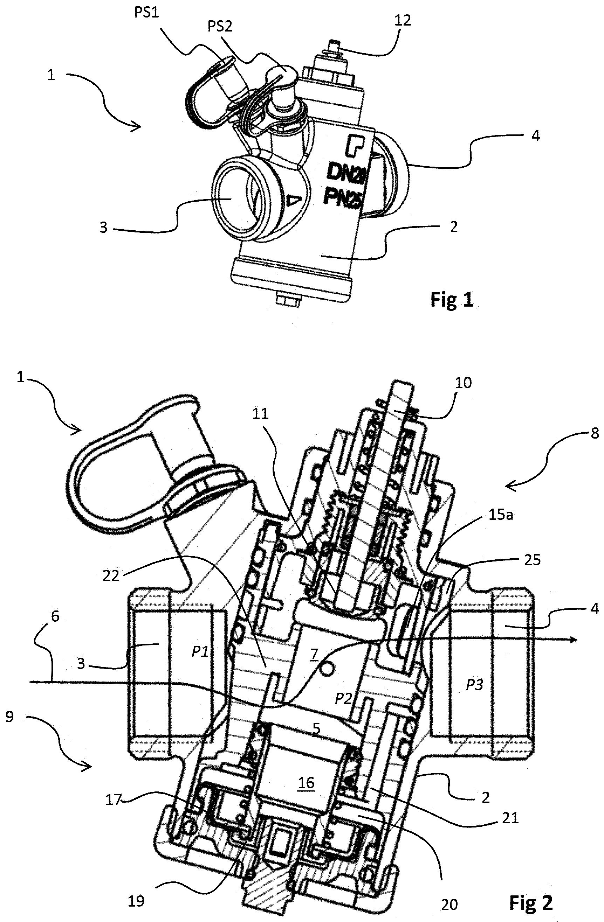

An embodiment of a pressure-independent control valve with a sleeve is shown in Figures 1 to 5b. This embodiment of the invention is not intended to be limiting.

As shown in the Figures, the valve 1 according to the invention comprises a valve body 2. The valve body 2 may have a generally tubular shape, or any suitable shape. The valve body 2 comprises a fluid inlet 3 and a fluid outlet 4. A fluid path 5 extends through the valve body 2, between the fluid inlet 2 and fluid outlet 4. In the embodiment shown in the Figures, the fluid inlet 3 and fluid outlet 4 are arranged on opposing sides of the valve body 2 and are co-axial.

The valve 1 is arrangeable in a fluid system to control the flow of fluid. The fluid system may be an HVAC fluid system. The fluid inlet 3 and fluid outlet 4 may be coupled to fluid pipes of the fluid system.

When the valve 1 is operating in fluid control mode, fluid enters the valve 1 via the fluid inlet 3, flows along the fluid path 5 and exits the valve via the fluid outlet 4. Arrow 6 of Figure 2 depicts the general directional flow of fluid through the valve 1 when operating in fluid control mode.

In the embodiment shown in the Figures, the fluid path 5 comprises an upstream fluid path region 5a and a downstream fluid path region 5b. The upstream fluid path region 5a and downstream fluid path region 5b are in fluid communication via an adjustment orifice 7 that is arranged within the fluid path. The upstream fluid path 5a is in fluid communication with the fluid inlet 3. The downstream fluid path 5b is in fluid communication with the fluid outlet 4. Fluid within the fluid inlet 3 has a first pressure P1, fluid within the fluid path 5 has a pressure P2 and fluid within the fluid outlet 4 has a third pressure P3. The pressure decreases through the valve whereby P1 > P2 > P3.

The valve 1 of the present invention comprises a fluid flow control 8 for controlling the volume of fluid through the valve. In the embodiment shown in the Figures, the fluid flow control 8 is arranged in the downstream flow path region 5b and is configured to control the volume of fluid through the adjustment orifice 7.

The valve 1 of the present invention comprises a pressure differential control 9 for controlling the pressure difference of the fluid to maintain a constant pressure different across the valve, and thereby maintain a constant flow rate of fluid regardless of any operating changes (variations) in pressure. The pressure differential control may be configured to control the pressure difference between fluid pressure P1 within the fluid inlet 3 and the fluid pressure P2 within the fluid path 5. Alternatively, the pressure differential control may be configured to control the pressure difference between the fluid pressure P2 in the fluid path 5 and the fluid pressure P3 within the fluid outlet 4. In the embodiment shown in the Figures, the pressure differential control 9 is arranged in the upstream fluid path region 5a and is configured to control the pressure difference between the fluid pressure P2 within the fluid path 5 and the fluid pressure P3 within the fluid outlet 4.

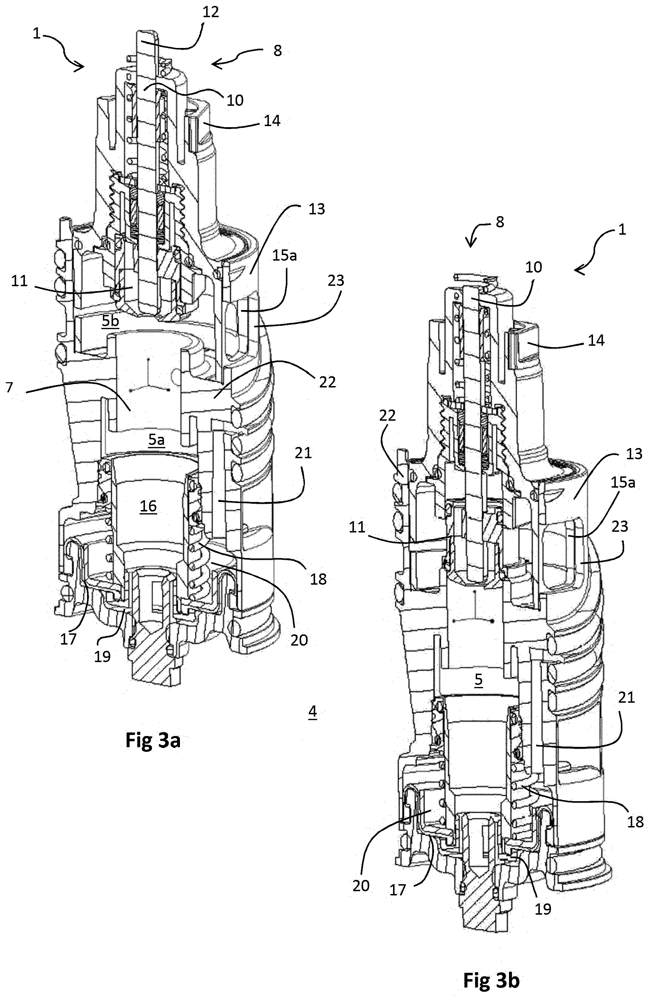

In the embodiment shown in the Figures, the fluid flow control 8 may comprise a pin 10, a cone 11 coupled to the distal end of the pin, and an pin actuator 12 coupled to a proximal end of the pin. The pin 10 is linearly movable under the actuation of the pin actuator 12, and the linear motion of the pin 10 linearly moves the cone 11 in a direction towards or away from the adjustment orifice 7. The movement of the cone 11 relative to the adjustment orifice 7 controls the volume flow rate of fluid through the adjustment orifice 7. As the cone 11 moves towards the adjustment orifice 7, the volume of fluid through the adjustment orifice 7 decreases. As the cone 11 moves away from the adjustment orifice 7 the volume of fluid through the adjustment orifice 7 increases. The cone 11 is movable under the actuation of the pin actuator 12 between an open position and a closed position relative to the adjustment orifice 7, and any position therebetween. When the cone 11 is in the open position, the adjustment orifice 7 is fully open and the volume flow rate through the adjustment orifice 7 is a maximum volume flow rate (see Figure 3a). To prohibit the flow of fluid through the valve, the cone may be moved to engage and close the adjustment orifice 7 (see Figure 3b). The pin actuator 12 may be rotated, pressed or otherwise actuated to move the pin 10 and thereby regulate the volume flow rate of fluid through the valve 1 as desired.

Alternatively or additionally, and as shown in the Figures, the fluid flow control 8 may comprise a shutter 13 and a shutter actuator 14 coupled to the shutter 13. The shutter 13 is arranged adjacent the fluid outlet 4. The shutter 13 is movable under the actuation of the shutter actuator 14 between an open and a closed position relative to the fluid outlet 4, and any position therebetween. When the shutter 13 is in the open position, the fluid outlet 4 is open. When the shutter 13 is in the closed position, the fluid outlet 4 is closed. The shutter comprises a first window 15a defining a first volume flow rate and a wall (not shown). When the shutter is in the open position, the first window is at least substantially aligned with the fluid outlet 4, to allow fluid to flow through the fluid outlet 4 with a first volume flow rate. When the shutter is in the closed position, the wall is at least substantially aligned with the fluid outlet 4, so as to seal and prohibit the flow of fluid through the fluid outlet 4. The shutter may be arranged in a partially open position, whereby the first window is partially aligned with the fluid outlet 4. As such, fluid may flow through the fluid outlet at a reduced volume flow rate, less than the defined first volume flow rate. The shutter may comprise multiple windows defining different volume flow rates. For example, as shown, in the Figures, the shutter 13 may further comprise a second window 15b defining a second volume flow rate, and a third window 15c defining a third volume flow rate. The shutter actuator 14 may operate separately or in conjunction with the pin actuator 12. The shutter 13 may be actuated sequentially and/or simultaneously to the cone 11. The shutter actuator 14 may be rotated, pressed or otherwise actuated to move the shutter 13, and thereby regulate the volume flow rate of fluid through the valve 1 as desired.

In the embodiment shown in the Figures, where the pressure differential control 9 is configured to the control the pressure differential between the fluid path 5 and the fluid outlet 4, the pressure differential control may comprise a piston 16, a diaphragm 17 (or other suitable flexible membrane) connected to the piston, and a spring 18 (or other suitable elastic member) acting on the upperside of the diaphragm 17. The piston 16 is linearly movable under the actuation of the diaphragm 17 in a direction towards or away from the adjustment orifice 7. The diaphragm 17 extends between a first chamber 19 and a second chamber 20, whereby the first chamber 19 is arranged below the diaphragm 17 and the second chamber 20 is arranged above the diaphragm 17. The first chamber 19 is in fluid communication with the fluid path 5 and so comprises fluid from the fluid path having a pressure P2. In the embodiment shown in the Figures, the piston 16 is hollow and defines a fluid channel between the fluid path 5 and the first chamber 19. As such, the first chamber 19 is in fluid communication with the fluid path 5 via the piston 16. The second chamber 20 is in fluid communication with the fluid outlet 4 and so comprises fluid from the fluid outlet 4 having a pressure P3. In the embodiments shown in the Figures, the valve 1 further comprises a first fluid channel 21 extending between the second chamber 20 and the fluid outlet 4. As such, the second chamber 20 is in fluid communication with the fluid outlet 4 via the fluid channel 21.

In operation, during fluid control mode, the underside of the diaphragm 17 is subject to a force exerted by the fluid at pressure 2 in the first chamber 19. The upperside of the diaphragm is subject to a force exerted by the fluid at pressure P3 in the second chamber 20 and the force exerted by the spring 18. The equilibrium of the forces acting on the diaphragm 17 determines the position of the diaphragm 17, and thereby the position of the piston 16 relative to the adjustment orifice 7. The position of the diaphragm 17, and thereby the position of the piston 16 relative to the adjustment orifice 7, adjusts automatically to any variations in fluid pressure P1 and/or P3 so as to maintain a constant pressure differential between P2 and P3.

The skilled person will understand the alternative arrangement of the pressure differential control when configured to control the pressure differential between the fluid path 5 and the fluid inlet 3, where the first chamber 19 is in fluid communication with the fluid inlet 3 and the second chamber is in communication with the fluid path 5. A second fluid channel will extend between the fluid inlet 3 and the first chamber 19 to provide the fluid communication.

In the present invention, the valve 1 further comprises a sleeve 22 inserted within valve body 2. The sleeve 22 is a separate component to the valve body 2. The sleeve 22 preferably conforms to the inner profile of the valve body 2 and forms a close fit. As such, the sleeve 22 acts as a liner within the valve body 2. The sleeve 22 may have a tubular shape, or any other suitable shape.

In the invention, and in the embodiment shown in the Figures, the sleeve 22 comprises a sleeve inlet aperture (not shown) aligned with the fluid inlet 3, and a sleeve outlet aperture 23 aligned with the fluid outlet 4. The sleeve 22 houses the fluid path 5 extending between the fluid inlet 3 and fluid outlet 4. As such, the sleeve 22 may house the adjustment orifice 7 arranged in the fluid path 5.

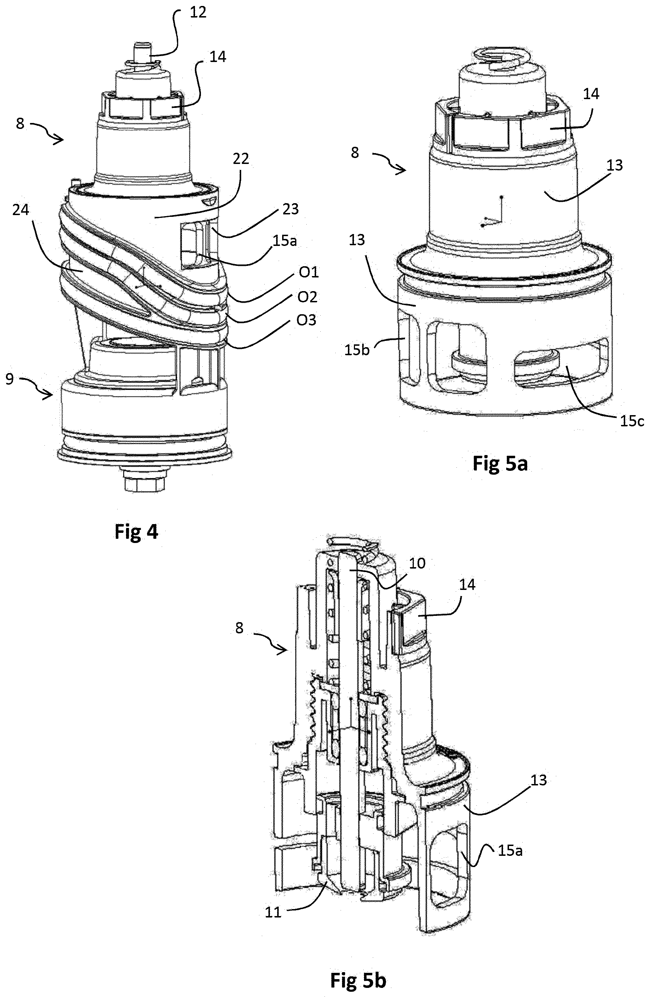

In the invention, and in the embodiment shown in the Figures, the sleeve 22 may house the fluid flow control 8, whereby at least a portion of the fluid flow control 8 is arranged within the sleeve 22. As shown in the Figures, the sleeve 22 may house the shutter 13, whereby the sleeve is configured between the shutter 13 and the valve body 2. As such, when the shutter is arranged in the open position, the first window 15a, sleeve outlet aperture 23 and fluid outlet 4 are substantially aligned - see Figure 4.

In the invention, and in the embodiment shown in the Figures, the sleeve 22 may also house the pressure differential control 9, whereby at least a portion of the differential control 9 is arranged within the sleeve 22.

In the invention, the sleeve 22 may comprise one or more fluid channels to transfer fluid, and thereby fluid pressure between one or more region of the valve 1 to another. For example, in the embodiment shown in the Figures where the second chamber 20 of the pressure differential control 9 is in fluid communication with the fluid outlet 4 (where the pressure differential control 9 is configured to control a pressure differential between the fluid path 5 and the fluid outlet 4) the sleeve 22 may comprise the first fluid channel 21 extending between the fluid outlet 4 and the second chamber 20 to transfer fluid having the third pressure P3 from the fluid outlet 4 to the second chamber 20. In the embodiment as shown in the Figures, the fluid channel 21 may be formed internally within the sleeve 22.

In an alternative embodiment where the first chamber 19 of the pressure differential control 9 is in fluid communication with the fluid inlet 3 (where the pressure differential control 9 is configured to control a pressure differential between the fluid path 5 and the fluid inlet 3), the sleeve 22 may comprise a second fluid channel (not shown) extending between the fluid inlet 3 and the first chamber 19 to transfer fluid having the first pressure P1 from the fluid inlet 3 to the first chamber 19. The second fluid channel extending between the fluid inlet 3 and the first chamber 19 may be formed internally within the sleeve 22.

In the invention, and in the embodiment of the valve shown in the Figures, the valve comprises a fluid path pressure sensor PS1 to monitor the fluid pressure P2 in the fluid path. In the invention, and in embodiment of the valve shown in the Figures, the sleeve 22 comprises a third fluid channel 24 extending between the fluid path 5 and the fluid path pressure sensor PS1. The third fluid channel 24 transfers fluid from the fluid path 5, and therefore fluid pressure P2, to the fluid path pressure sensor PS1 so that the pressure P2 of the fluid path 5 can be monitored. The third fluid channel 24 may have any suitable configuration. At least a portion of the third fluid channel 24 extends along the outer surface of the sleeve 22 between the fluid path 5 and the fluid path pressure sensor PS1. The third fluid channel 24 may comprise a recess (groove, indent) formed in the outer surface of the sleeve. The third fluid channel 24 comprises a gap space defined between seals and the outer surface of the sleeve and the inner surface of the valve body. In the embodiment shown in the Figures, the third fluid channel 24 comprises a spiralling channel arranged on the outer surface of the sleeve 22. One end of the spiralling channel is arranged in fluid communication with the fluid path 5, whilst the other end of the channel is arranged in fluid communication with the fluid path pressure sensor PS1. The spiralling channel is defined by O-ring seals 02, 03 mounted on the outer surface of the sleeve.

In the invention, and in the embodiment shown in the Figures, if the pressure differential control is configured to control the pressure differential between the fluid path 5 and the fluid outlet 4 then the valve comprises a fluid outlet sensor PS2 to monitor the fluid pressure P3 in the fluid outlet 4. In the invention, and in the embodiment shown in the Figures, the sleeve 22 may also comprise a fourth channel 25 extending between the fluid outlet 4 and the fluid outlet pressure sensor PS2. The fourth channel 25 transfers fluid from the fluid outlet 4, and therefore fluid pressure P3, to the fluid outlet pressure sensor PS2 so that the pressure P3 of the fluid outlet 4 can be monitored. The fourth fluid channel 25 may have any suitable configuration At least a portion of the fourth fluid channel 25 may extend along the outer surface of the sleeve 22 between the fluid outlet 4 and the fluid outlet pressure sensor PS2. The fourth fluid channel 25 may comprise a recess (groove, indent) formed in the outer surface of the sleeve. The fourth fluid channel 25 may comprise a gap space defined between seals and/or the outer surface of the sleeve and the inner surface of the valve body. In the embodiment shown in the Figures, the fourth fluid channel 25 comprises a gap space channel formed in a space between the outer surface of the sleeve 22 and the inner surface of the valve body 2. The gap space is further defined by O-ring 01 whereby the O-ring is positioned to arrange the gap space in a region of low turbulence. One end of the gap space channel is arranged in fluid communication with the fluid outlet 4, whilst the other end of the gap space channel is arranged in fluid communication with the fluid outlet pressure sensor PS2.

Together, the fluid path pressure sensor PS1 and the fluid outlet pressure sensor PS2 can monitor the pressure at the fluid path 5 and fluid outlet 4 to identify the pressure differential control is maintaining a constant pressure different between fluid pressures P2 and P3.

In an alternative embodiment, where the pressure differential control is configured to control the pressure differential between the fluid path 5 and the fluid inlet 3, then the valve comprises a fluid inlet sensor (not shown) to monitor the fluid pressure P1 in the fluid inlet 3. The sleeve 22 may also comprise a fifth fluid channel (not shown) extending between the fluid inlet 3 and the fluid inlet pressure sensor. The fifth fluid channel transfers fluid from the fluid inlet 3, and therefore fluid pressure P1, to the fluid inlet pressure sensor so that the pressure P1 of the fluid inlet 3 can be monitored. The fifth fluid channel may have any suitable configuration. For example, at least a portion of the fifth fluid channel may extend along the outer surface of the sleeve 22 between the fluid outlet 4 and the fluid inlet pressure sensor. The fifth fluid channel may comprise a recess (groove, indent) formed in the outer surface of the sleeve. The fifth fluid channel may comprise a gap space defined between seals and/or the outer surface of the sleeve and the inner surface of the valve body.

Together, the fluid path pressure sensor PS1 and the fluid inlet pressure sensor can monitor the pressure at the fluid path 5 and the fluid inlet 3 to identify the pressure differential control is maintaining a constant pressure different between fluid pressures P1 and P2.

The sleeve may be formed from a plastic material. The sleeve may be manufactured using an injection moulding technique. Hence, the fluid channels may be moulded into the sleeve.

It will be appreciated by persons skilled in the art that the above embodiments have been described by way of example only and not in any limitative sense, and that various alterations and modifications are possible without departing from the scope of the invention as defined by the appended claims.

## Claims

1. A pressure independent control valve (1) comprising:
a valve body (2) comprising a fluid inlet (3), a fluid outlet (4),
a fluid path (5) extending through the valve body (2)¹ between the fluid inlet (3) and the fluid outlet (4);
a pressure differential control (9);
a sleeve (22) inserted within the valve body (2), the sleeve (22) having an inlet aperture aligned with the fluid inlet (3) and an outlet aperture (23) aligned with the fluid outlet (4),² the sleeve (22) housing the fluid path (5)³ and the pressure differential control (9);⁴
a pair of seals (02, 03) mounted on an outer surface of the sleeve (22);⁵
a fluid path pressure sensor (PS1) to monitor the fluid pressure (P2) in the fluid path (5);⁶ and
a fluid outlet sensor (PS2) to monitor the fluid pressure (P3) in the fluid outlet (4);⁷ wherein
the pressure differential control (9) comprises a chamber in fluid communication with the fluid outlet (4), and the sleeve (22) comprises a first fluid channel (21) extending between the fluid outlet (4) and the chamber (20) to guide fluid to flow from the fluid outlet (4) to the chamber (20); and wherein
the sleeve (22) comprises a second fluid channel (24) extending between the fluid path (5) and the fluid path pressure sensor (PS1) to guide fluid from the fluid path (5) to the fluid path pressure sensor (PS1)⁸; and wherein
the second fluid channel (24) comprises an outer channel arranged on the outer surface of the sleeve (22)⁹; the outer channel defined between the pair of seals (02, 03), the outer surface of the sleeve (22), and the inner surface of the valve body¹⁰.

2. A pressure independent control valve (1) comprising:
a valve body (2) comprising a fluid inlet (3), a fluid outlet (4),
a fluid path (5) extending through the valve body (2) between the fluid inlet (3) and the fluid outlet (4);
a pressure differential control (9);
a sleeve (22) inserted within the valve body (2), the sleeve (22) having an inlet aperture aligned with the fluid inlet (3) and an outlet aperture (23) aligned with the fluid outlet (4), the sleeve (22) housing the fluid path (5) and the pressure differential control (9);
a pair of seals (O2,O3) mounted on the outer surface of the sleeve (22);
a fluid path pressure sensor (PS1) to monitor the fluid pressure (P2) in the fluid path (5);
a fluid inlet sensor to monitor the fluid pressure (P1) in the fluid inlet (3);¹¹ wherein
the pressure differential control (9) comprises a chamber in fluid communication with the fluid inlet (3), and the sleeve (22) comprises a first fluid channel extending between the fluid inlet (3) and the chamber to guide fluid to flow from the fluid inlet (3) to the chamber; and wherein
the sleeve (22) comprises a second fluid channel (24) extending between the fluid path (5) and the fluid path pressure sensor (PS1) to guide fluid from the fluid path (5) to the fluid path pressure sensor (PS1); and wherein
the second fluid channel (24) comprises an outer channel arranged on the outer surface of the sleeve (22); the outer channel defined between the pair of seals (02, 03), the outer surface of the sleeve (22), and the inner surface of the valve body.

3. The valve (1) according to claim 1 or 2, wherein one end of the outer channel is arranged in fluid communication with the fluid path (5) and the other end of the outer channel is arranged in fluid communication with the fluid path pressure sensor (PS1)¹²

4. The valve (1) according to claim 1 or 2, wherein the valve body (2) has an inner profile and the sleeve (22) is configured to conform to the inner profile of the valve body (2).¹³

5. The valve (1) according to claim 1 or 2, wherein the outer channel is spiralling channel.¹⁵

6. The valve (1) according to claim 1 or 2, wherein the seals (02, 03) are O-ring seals.¹⁶

7. The valve (1) according to any preceding claim:
wherein when the chamber (20) is in fluid communication with the fluid outlet (4):
the valve (1) further comprising a fluid outlet pressure sensor (PS2); and
the sleeve (22) comprising a third fluid channel extending between the fluid outlet (4) and a fluid outlet pressure sensor (PS2) to guide fluid from the fluid outlet (4) to the fluid outlet pressure sensor (PS2);
or
wherein when the chamber is in fluid communication with the fluid inlet (3):
the valve (1) further comprising a fluid inlet pressure sensor, and
the sleeve (22) further comprising a fourth fluid channel extending between the fluid inlet (3) and a fluid inlet pressure sensor to guide fluid to flow from the fluid inlet (3) to the fluid inlet pressure sensor.

8. The valve (1) according to any preceding claim, wherein the sleeve comprises a plastic material.

9. The valve (1) according to any preceding claim, wherein the sleeve is manufactured by an injection moulding technique.

10. A fluid system comprising:
a pressure-independent control valve (1) according to any of claims 1 to 9;
a first fluid pipe coupled to the fluid inlet (3) of the valve (1);
a second fluid pipe coupled to the fluid outlet (4) of the valve (1).

11. A method of distributing fluid pressure in a pressure-independent control valve (1) according to any of claims 1 to 9:
wherein when the chamber (20) is in fluid communication with the fluid outlet (4) and the first fluid channel (21) of the inserted sleeve (22) extends between the chamber (20) and the fluid outlet (4), comprising:
guiding fluid to flow from the fluid outlet (4) to the chamber (20) via the first fluid channel (21) of the inserted sleeve (22);
or
wherein when the chamber is in fluid communication with the fluid inlet (3) and the first fluid channel of the inserted sleeve (22) extends between the chamber and the fluid inlet (3), comprising:
guiding fluid to flow from the fluid inlet (3) to the chamber via the first fluid channel of the inserted sleeve (22).

12. The method according to claim 11 comprising:
guiding fluid to flow from the fluid path (5) to the fluid path pressure sensor (PS1) via the second fluid channel (24) formed in the inserted sleeve (22); and monitoring the fluid pressure (P2) of the fluid path (5) using the fluid path pressure sensor (PS1).

13. The method according to any of claims 11 or 12:
wherein when the chamber (20) is in fluid communication with the fluid outlet (4) and the third channel of the inserted sleeve (22) extends between the fluid outlet (4) and the fluid outlet pressure sensor (PS2), comprising:
guiding fluid to flow from the fluid outlet (4) to the fluid outlet pressure sensor (PS2) via the third channel of the inserted sleeve (22); and
monitoring the fluid pressure (P3) of the fluid outlet (4) using the fluid outlet pressure sensor (PS2);
or
wherein when the chamber is in fluid communication with the fluid inlet (3) and the fourth channel of the inserted sleeve (22) extends between the fluid inlet (3) and the fluid inlet pressure sensor, comprising:
guiding fluid to flow from the fluid inlet (3) to the fluid inlet pressure sensor via the fourth channel of the inserted sleeve (22); and
monitoring the fluid pressure (P1) of the fluid inlet (3) using the fluid inlet pressure sensor.

## Patentansprüche

1. Ein druckunabhängiges Steuerventil (1), das Folgendes beinhaltet:
einen Ventilkörper (2), der einen Fluideinlass (3), einen Fluidauslass (4) beinhaltet,
einen Fluidpfad (5), der sich durch den Ventilkörper (2)¹ zwischen dem Fluideinlass (3) und dem Fluidauslass (4) erstreckt;
eine Druckdifferenzsteuerung (9);
eine Hülse (22), die in den Ventilkörper (2) eingesetzt ist, wobei die Hülse (22) eine Einlassöffnung, die auf den Fluideinlass (3) ausgerichtet ist, und eine Auslassöffnung (23), die auf den Fluidauslass (4)² ausgerichtet ist, aufweist, wobei die Hülse (22) den Fluidpfad (5)³ und die Druckdifferenzsteuerung (9)⁴ aufnimmt;
ein Paar Dichtungen (O2, O3), die an einer Außenfläche der Hülse (22)⁵ montiert sind;
einen Fluidpfaddrucksensor (PS1), um den Fluiddruck (P2) in dem Fluidpfad (5)⁶ zu überwachen; und
einen Fluidauslasssensor (PS2), um den Fluiddruck (P3) in dem Fluidauslass (4)⁷ zu überwachen; wobei
die Druckdifferenzsteuerung (9) eine Kammer in Fluidkommunikation mit dem Fluidauslass (4) beinhaltet und die Hülse (22) einen ersten Fluidkanal (21) beinhaltet, der sich zwischen dem Fluidauslass (4) und der Kammer (20) erstreckt, um Fluid zu leiten, um von dem Fluidauslass (4) zu der Kammer (20) zu strömen; und wobei
die Hülse (22) einen zweiten Fluidkanal (24) beinhaltet, der sich zwischen dem Fluidpfad (5) und dem Fluidpfaddrucksensor (PS1) erstreckt, um Fluid von dem Fluidpfad (5) zu dem Fluidpfaddrucksensor (PS1)⁸ zu leiten, und wobei
der zweite Fluidkanal (24) einen äußeren Kanal beinhaltet, der an der Außenfläche der Hülse (22)⁹ angeordnet ist; wobei der äußere Kanal zwischen dem Paar Dichtungen (O2, O3), der Außenfläche der Hülse (22) und der Innenfläche des Ventilkörpers¹⁰ definiert ist.

2. Ein druckunabhängiges Steuerventil (1), das Folgendes beinhaltet:
einen Ventilkörper (2), der einen Fluideinlass (3), einen Fluidauslass (4) beinhaltet,
einen Fluidpfad (5), der sich durch den Ventilkörper (2) zwischen dem Fluideinlass (3) und dem Fluidauslass (4) erstreckt;
eine Druckdifferenzsteuerung (9);
eine Hülse (22), die in den Ventilkörper (2) eingesetzt ist, wobei die Hülse (22) eine Einlassöffnung, die auf den Fluideinlass (3) ausgerichtet ist, und eine Auslassöffnung (23), die auf den Fluidauslass (4) ausgerichtet ist, aufweist, wobei die Hülse (22) den Fluidpfad (5) und die Druckdifferenzsteuerung (9) aufnimmt;
ein Paar Dichtungen (O2, O3), die an der Außenfläche der Hülse (22) montiert sind;
einen Fluidpfaddrucksensor (PS1), um den Fluiddruck (P2) in dem Fluidpfad (5) zu überwachen;
einen Fluideinlasssensor, um den Fluiddruck (P1) in dem Fluideinlass (3)¹¹ zu überwachen; wobei
die Druckdifferenzsteuerung (9) eine Kammer in Fluidkommunikation mit dem Fluideinlass (3) beinhaltet und die Hülse (22) einen ersten Fluidkanal beinhaltet, der sich zwischen dem Fluideinlass (3) und der Kammer erstreckt, um Fluid zu leiten, um von dem Fluideinlass (3) zu der Kammer zu strömen; und wobei
die Hülse (22) einen zweiten Fluidkanal (24) beinhaltet, der sich zwischen dem Fluidpfad (5) und dem Fluidpfaddrucksensor (PS1) erstreckt, um Fluid von dem Fluidpfad (5) zu dem Fluidpfaddrucksensor (PS1) zu leiten; und wobei
der zweite Fluidkanal (24) einen äußeren Kanal beinhaltet, der an der Außenfläche der Hülse (22) angeordnet ist; wobei der äußere Kanal zwischen dem Paar Dichtungen (O2, O3), der Außenfläche der Hülse (22) und der Innenfläche des Ventilkörpers definiert ist.

3. Ventil (1) gemäß Anspruch 1 oder 2, wobei ein Ende des äußeren Kanals in Fluidkommunikation mit dem Fluidpfad (5) angeordnet ist und das andere Ende des äußeren Kanals in Fluidkommunikation mit dem Fluidpfaddrucksensor (PS1)¹² angeordnet ist.

4. Ventil (1) gemäß Anspruch 1 oder 2, wobei der Ventilkörper (2) ein Innenprofil aufweist und die Hülse (22) konfiguriert ist, um sich an das Innenprofil des Ventilkörpers (2)¹³ anzupassen.

5. Ventil (1) gemäß Anspruch 1 oder 2, wobei der äußere Kanal ein Spiralkanal¹⁵ ist.

6. Ventil (1) gemäß Anspruch 1 oder 2, wobei die Dichtungen (O2, O3) O-Ring-Dichtungen¹⁶ sind.

7. Ventil (1) gemäß einem der vorhergehenden Ansprüche:
wobei, wenn die Kammer (20) in Fluidkommunikation mit dem Fluidauslass (4) ist:
das Ventil (1) ferner einen Fluidauslassdrucksensor (PS2) beinhaltet; und
die Hülse (22) einen dritten Fluidkanal beinhaltet, der sich zwischen dem Fluidauslass (4) und einem Fluidauslassdrucksensor (PS2) erstreckt, um Fluid von dem Fluidauslass (4) zu dem Fluidauslassdrucksensor (PS2) zu leiten; oder
wobei, wenn die Kammer in Fluidkommunikation mit dem Fluideinlass (3) ist:
das Ventil (1) ferner einen Fluideinlassdrucksensor beinhaltet, und
die Hülse (22) ferner einen vierten Fluidkanal beinhaltet, der sich zwischen dem Fluideinlass (3) und einem Fluideinlassdrucksensor erstreckt, um Fluid zu leiten, um von dem Fluideinlass (3) zu dem Fluideinlassdrucksensor zu strömen.

8. Ventil (1) gemäß einem der vorhergehenden Ansprüche, wobei die Hülse ein Kunststoffmaterial beinhaltet.

9. Ventil (1) gemäß einem der vorhergehenden Ansprüche, wobei die Hülse durch eine Spritzgusstechnik hergestellt wird.

10. Ein Fluidsystem, das Folgendes beinhaltet:
ein druckunabhängiges Steuerventil (1) gemäß einem der Ansprüche 1 bis 9;
eine erste Fluidleitung, die mit dem Fluideinlass (3) des Ventils (1) gekoppelt ist;
eine zweite Fluidleitung, die mit dem Fluidauslass (4) des Ventils (1) gekoppelt ist.

11. Ein Verfahren zum Verteilen von Fluiddruck in einem druckunabhängigen Steuerventil (1) gemäß einem der Ansprüche 1 bis 9:
wobei, wenn die Kammer (20) in Fluidkommunikation mit dem Fluidauslass (4) ist und
sich der erste Fluidkanal (21) der eingesetzten Hülse (22) zwischen der Kammer (20) und dem Fluidauslass (4) erstreckt, beinhaltend:
Leiten von Fluid, um von dem Fluidauslass (4) zu der Kammer (20) über den ersten Fluidkanal (21) der eingesetzten Hülse (22) zu strömen;
oder
wobei, wenn die Kammer in Fluidkommunikation mit dem Fluideinlass (3) ist und sich der erste Fluidkanal der eingesetzten Hülse (22) zwischen der Kammer und dem Fluideinlass (3) erstreckt, beinhaltend:
Leiten von Fluid, um von dem Fluideinlass (3) zu der Kammer über den ersten Fluidkanal der eingesetzten Hülse (22) zu strömen.

12. Verfahren gemäß Anspruch 11, das Folgendes beinhaltet:
Leiten von Fluid, um von dem Fluidpfad (5) zu dem Fluidpfaddrucksensor (PS1) über den zweiten Fluidkanal (24), der in der eingesetzten Hülse (22) gebildet ist, zu strömen;
und
Überwachen des Fluiddrucks (P2) des Fluidpfads (5) unter Verwendung des Fluidpfaddrucksensors (PS1).

13. Verfahren gemäß einem der Ansprüche 11 oder 12:
wobei, wenn die Kammer (20) in Fluidkommunikation mit dem Fluidauslass (4) ist und
sich der dritte Kanal der eingesetzten Hülse (22) zwischen dem Fluidauslass (4) und
dem Fluidauslassdrucksensor (PS2) erstreckt, beinhaltend:
Leiten von Fluid, um von dem Fluidauslass (4) zu dem Fluidauslassdrucksensor (PS2) über den dritten Kanal der eingesetzten Hülse (22) zu strömen; und
Überwachen des Fluiddrucks (P3) des Fluidauslasses (4) unter Verwendung des Fluidauslassdrucksensors (PS2); oder
wobei, wenn die Kammer in Fluidkommunikation mit dem Fluideinlass (3) ist und sich der vierte Kanal der eingesetzten Hülse (22) zwischen dem Fluideinlass (3) und dem Fluideinlassdrucksensor erstreckt, beinhaltend:
Leiten von Fluid, um von dem Fluideinlass (3) zu dem Fluideinlassdrucksensor über den vierten Kanal der eingesetzten Hülse (22) zu strömen; und
Überwachen des Fluiddrucks (P1) des Fluideinlasses (3) unter Verwendung des Fluideinlassdrucksensors.

## Revendications

1. Une soupape de commande indépendante de la pression (1) comprenant :
un corps de soupape (2) comprenant une entrée de fluide (3), une sortie de fluide (4),
un trajet de fluide (5) s'étendant à travers le corps de soupape (2)¹ entre l'entrée de fluide (3) et la sortie de fluide (4) ;
une commande de différentiel de pression (9) ;
un manchon (22) inséré à l'intérieur du corps de soupape (2), le manchon (22) ayant une ouverture d'entrée alignée avec l'entrée de fluide (3) et une ouverture de sortie (23) alignée avec la sortie de fluide (4),² le manchon (22) logeant le trajet de fluide (5)³ et la commande de différentiel de pression (9) ;⁴
une paire de joints d'étanchéité (O2, O3) montés sur une surface externe du manchon (22) ;⁵
un capteur de pression de trajet de fluide (PS1) pour surveiller la pression de fluide (P2) dans le trajet de fluide (5) ;⁶ et
un capteur de sortie de fluide (PS2) pour surveiller la pression de fluide (P3) dans la sortie de fluide (4) ;⁷ où
la commande de différentiel de pression (9) comprend une chambre en communication fluidique avec la sortie de fluide (4), et le manchon (22) comprend un premier canal de fluide (21) s'étendant entre la sortie de fluide (4) et la chambre (20) pour guider du fluide afin qu'il s'écoule de la sortie de fluide (4) à la chambre (20) ; et où
le manchon (22) comprend un deuxième canal de fluide (24) s'étendant entre le trajet de fluide (5) et le capteur de pression de trajet de fluide (PS1) pour guider du fluide du trajet de fluide (5) au capteur de pression de trajet de fluide (PS1)⁸, et où
le deuxième canal de fluide (24) comprend un canal externe agencé sur la surface externe du manchon (22)⁹ ; le canal externe étant défini entre la paire de joints d'étanchéité (O2, O3), la surface externe du manchon (22), et la surface interne du corps de soupape¹⁰.

2. Une soupape de commande indépendante de la pression (1) comprenant :
un corps de soupape (2) comprenant une entrée de fluide (3), une sortie de fluide (4), un trajet de fluide (5) s'étendant à travers le corps de soupape (2) entre l'entrée de fluide (3) et la sortie de fluide (4) ;
une commande de différentiel de pression (9) ;
un manchon (22) inséré à l'intérieur du corps de soupape (2), le manchon (22) ayant une ouverture d'entrée alignée avec l'entrée de fluide (3) et une ouverture de sortie (23) alignée avec la sortie de fluide (4), le manchon (22) logeant le trajet de fluide (5) et la commande de différentiel de pression (9) ;
une paire de joints d'étanchéité (O2, O3) montés sur la surface externe du manchon (22) ;
un capteur de pression de trajet de fluide (PS1) pour surveiller la pression de fluide (P2) dans le trajet de fluide (5) ;
un capteur d'entrée de fluide pour surveiller la pression de fluide (P1) dans l'entrée de fluide (3) ;¹¹ où
la commande de différentiel de pression (9) comprend une chambre en communication fluidique avec l'entrée de fluide (3), et le manchon (22) comprend un premier canal de fluide s'étendant entre l'entrée de fluide (3) et la chambre pour guider du fluide afin qu'il s'écoule de l'entrée de fluide (3) à la chambre ; et où
le manchon (22) comprend un deuxième canal de fluide (24) s'étendant entre le trajet de fluide (5) et le capteur de pression de trajet de fluide (PS1) pour guider du fluide du trajet de fluide (5) au capteur de pression de trajet de fluide (PS1) ; et où le deuxième canal de fluide (24) comprend un canal externe agencé sur la surface externe du manchon (22) ; le canal externe étant défini entre la paire de joints d'étanchéité (O2, O3), la surface externe du manchon (22), et la surface interne du corps de soupape.

3. La soupape (1) selon la revendication 1 ou la revendication 2, où une extrémité du canal externe est agencée en communication fluidique avec le trajet de fluide (5) et l'autre extrémité du canal externe est agencée en communication fluidique avec le capteur de pression de trajet de fluide (PS1).¹²

4. La soupape (1) selon la revendication 1 ou la revendication 2, où le corps de soupape (2) a un profil interne et le manchon (22) est configuré pour se conformer au profil interne du corps de soupape (2).¹³

5. La soupape (1) selon la revendication 1 ou la revendication 2, où le canal externe est un canal en spirale.¹⁵

6. La soupape (1) selon la revendication 1 ou la revendication 2, où les joints d'étanchéité (O2, O3) sont des joints toriques d'étanchéité.¹⁶

7. La soupape (1) selon n'importe quelle revendication précédente :
où lorsque la chambre (20) est en communication fluidique avec la sortie de fluide (4) :
la soupape (1) comprend en outre un capteur de pression de sortie de fluide (PS2) ; et
le manchon (22) comprend un troisième canal de fluide s'étendant entre la sortie de fluide (4) et un capteur de pression de sortie de fluide (PS2) pour guider du fluide de la sortie de fluide (4) au capteur de pression de sortie de fluide (PS2) ; ou bien
où lorsque la chambre est en communication fluidique avec l'entrée de fluide (3) :
la soupape (1) comprend en outre un capteur de pression d'entrée de fluide, et
le manchon (22) comprend en outre un quatrième canal de fluide s'étendant entre l'entrée de fluide (3) et un capteur de pression d'entrée de fluide pour guider du fluide afin qu'il s'écoule de l'entrée de fluide (3) au capteur de pression d'entrée de fluide.

8. La soupape (1) selon n'importe quelle revendication précédente, où le manchon comprend une matière plastique.

9. La soupape (1) selon n'importe quelle revendication précédente, où le manchon est fabriqué par une technique de moulage par injection.

10. Un système de fluide comprenant :
une soupape de commande indépendante de la pression (1) selon n'importe lesquelles des revendications 1 à 9 ;
une première conduite de fluide couplée à l'entrée de fluide (3) de la soupape (1) ;
une deuxième conduite de fluide couplée à la sortie de fluide (4) de la soupape (1).

11. Un procédé de distribution de pression de fluide dans une soupape de commande indépendante de la pression (1) selon n'importe lesquelles des revendications 1 à 9 :
où lorsque la chambre (20) est en communication fluidique avec la sortie de fluide (4) et que le premier canal de fluide (21) du manchon (22) inséré s'étend entre la chambre (20) et la sortie de fluide (4), il comprend :
le fait de guider du fluide afin qu'il s'écoule de la sortie de fluide (4) à la chambre (20) via le premier canal de fluide (21) du manchon (22) inséré ;
ou bien
où lorsque la chambre est en communication fluidique avec l'entrée de fluide (3) et que le premier canal de fluide du manchon (22) inséré s'étend entre la chambre et l'entrée de fluide (3), il comprend :
le fait de guider du fluide afin qu'il s'écoule de l'entrée de fluide (3) à la chambre via le premier canal de fluide du manchon (22) inséré.

12. Le procédé selon la revendication 11 comprenant :
le fait de guider du fluide afin qu'il s'écoule du trajet de fluide (5) au capteur de pression de trajet de fluide (PS1) via le deuxième canal de fluide (24) formé dans le manchon (22) inséré ; et
le fait de surveiller la pression de fluide (P2) du trajet de fluide (5) en utilisant le capteur de pression de trajet de fluide (PS1).

13. Le procédé selon n'importe lesquelles des revendications 11 ou 12 :
où lorsque la chambre (20) est en communication fluidique avec la sortie de fluide (4) et que le troisième canal du manchon (22) inséré s'étend entre la sortie de fluide (4) et le capteur de pression de sortie de fluide (PS2), il comprend :
le fait de guider du fluide afin qu'il s'écoule de la sortie de fluide (4) au capteur de pression de sortie de fluide (PS2) via le troisième canal du manchon (22) inséré ; et
le fait de surveiller la pression de fluide (P3) de la sortie de fluide (4) en utilisant le capteur de pression de sortie de fluide (PS2) ;
ou bien
où lorsque la chambre est en communication fluidique avec l'entrée de fluide (3) et que le quatrième canal du manchon (22) inséré s'étend entre l'entrée de fluide (3) et le capteur de pression d'entrée de fluide, il comprend :
le fait de guider du fluide afin qu'il s'écoule de l'entrée de fluide (3) au capteur de pression d'entrée de fluide via le quatrième canal du manchon (22) inséré ; et
le fait de surveiller la pression de fluide (P1) de l'entrée de fluide (3) en utilisant le capteur de pression d'entrée de fluide.
